# EUROPÄISCHE PATENTSCHRIFT

(11) **EP 3 552 473 B1**
(45) Veröffentlichungstag und Bekanntmachung des Hinweises auf die Patenterteilung: **10.04.2024**
(21) Anmeldenummer: 19155634.9
(22) Anmeldetag: 06.02.2019
(51) Int. Cl.: A01D 41/14

(54) **MÄHDRESCHER MIT EINZUGSWALZENAUTOMAT**
COMBINE HARVESTER WITH FEED ROLLER CONTROLLER
MOISSONNEUSE-BATTEUSE AVEC CONTRÔLEUR DE ROULEAUX D'AMENÉE

(30) Priorität: 10.04.2018 DE 102018108405
(43) Veröffentlichungstag der Anmeldung: 16.10.2019
(73) Patentinhaber: CLAAS Selbstfahrende Erntemaschinen GmbH, 33428 Harsewinkel (DE)
(72) Erfinder: Terörde, Stefan, 48231 Warendorf (DE); Baumgarten, Joachim, 48361 Beelen (DE); Nüvemann, Tobias, 48336 Sassenberg (DE); Bormann, Bastian, 33334 Gütersloh (DE); Vöcking, Henner, 33397 Rietberg (DE); Wilken, Andreas, 49143 Bissendorf (DE); Bussmann, Christoph, 33428 Harsewinkel (DE); Berger, Arthur, 49143 Bissendorf (DE); Dieckmeyer, Sascha, 49326 Melle (DE)
(74) Vertreter: CLAAS Gruppe

(56) Entgegenhaltungen:
- EP-A1- 3 114 919
- EP-A1- 3 132 711
- DE-A1- 3 227 975
- DE-A1-102015 004 343
- US-A1- 2010 212 277

## Beschreibung

Die vorliegende Anmeldung betrifft einen Mähdrescher gemäß dem Oberbegriff von Anspruch 1.

Der Mähdrescher ist zum Schneiden von jeweils zu erntenden Pflanzen mit einem Mähbalken ausgestattet, der typischerweise über eine erste feststehende Messerleiste sowie eine zweite periodisch hin und her oszillierende Messerleiste verfügt. Diese beiden Messerleisten wirken unmittelbar miteinander zusammen, wobei die feststehende Messerleiste gewissermaßen das Untermesser zu der sich bewegenden Messerleiste bildet. Die geschnittenen Pflanzen werden typischerweise auf einem Schneidtisch abgelegt und in Richtung eines Schrägförderers gefördert. Um die geschnittenen Pflanzen dem Schrägförderer zuzuführen, verfügt der Mähdrescher über eine drehantreibbare Einzugswalze, die um eine zu einer Längsachse des Mähdreschers senkrechte Rotationsachse antreibbar und in einer Arbeitshöhe oberhalb des Schneidtischs angeordnet ist. Die Einzugswalze dazu geeignet, mit den geschnittenen Pflanzen einzugreifen, sodass letztere in Richtung des Schrägförderers gefördert werden. Mittels des Schrägförderers werden die geschnittenen Pflanzen weiter in Richtung einer Dreschtrommel des Mähdreschers gefördert, mittels derer Früchte der geschnittenen Pflanzen von Pflanzenresten abtrennbar sind. Der Mähdrescher verfügt weiterhin über mindestens ein Fahrassistenzsystem, mittels dessen zumindest ein Betriebsparameter des Mähdreschers steuerbar ist, sodass ein Maschinenführer bei der Steuerung des Mähdreschers insgesamt zumindest entlastet wird. Das Fahrassistenzsystem verfügt hierzu über mindestens eine Datenverarbeitungsanlage und mindestens einen Datenspeicher.

Die Einzugswalze ist langgestreckt ausgeführt und erstreckt sich quer zu der Längsachse des Mähdreschers. Sie verfügt über einen Walzenkern, der eine äußere Mantelfläche umfasst. Die Einzugswalze ist mit einer Mehrzahl von Einzugsfingern ausgestattet, die sich radial über die äußere Mantelfläche des Walzenkerns hinaus erstrecken. Dies gilt zumindest für einen Teilumfangsbereich der Einzugswalze, insbesondere in einem "Arbeitsbereich" derselben. Zumindest in diesem Arbeitsbereich, in dem die Einzugswalze mit den geschnittenen Pflanzen eingreift, stehen die Einzugsfinger über die Mantelfläche des Walzenkerns hinaus vor. In mindestens einem anderen Teilumfangsbereich der Einzugswalze, der nicht der Arbeitsbereich ist, können die Einzugsfinger hingegen beispielsweise innerhalb des Walzenkerns versenkt sein. Insbesondere ist es denkbar, dass die Einzugsfinger derart relativ zu dem Walzenkern beweglich sind, dass sie in Abhängigkeit einer Drehstellung des Walzenkerns aus selbigem ausgefahren bzw. in ihn eingefahren sind.

Mähdrescher der vorstehend beschriebenen Art sind im Stand der Technik bereits bekannt. Hierzu wird beispielhaft auf die Europäische Patentanmeldung EP 3 132 711 A1 hingewiesen. Diese beschreibt einen Mähdrescher mit einem Schneidwerk, der über ein Fahrassistenzsystem zur Ansteuerung des Schneidwerks verfügt. Weiterhin verfügt der bekannte Mähdrescher über eine Einzugswalze der vorstehend beschriebenen Art, die mit einer Mehrzahl von Einzugsfingern ausgestattet ist. Ferner umfasst die bekannte Einzugswalze eine Schneckenwendel, die an dem Walzenkern angeordnet ist und radial über selbigen vorsteht.

Mähdrescher können grundsätzlich bei Vorliegen verschiedenster Ernteparameter betrieben werden. Ein solcher Ernteparameter kann zum Beispiel die Art des zu erntenden Getreides betreffen. Weiterhin können die Feuchte des Ernteguts und/oder ein Durchsatz von Erntegut ausschlaggebende Ernteparameter darstellen, auf die der Betrieb bzw. die Steuerung eines jeweiligen Mähdreschers abgestimmt werden muss oder zumindest sollte. Somit kann beispielsweise eine erhöhte Feuchtigkeit des Ernteguts bereits am Schneidtisch zu einer Verklumpung und folglich Verstopfung im Bereich der Einzugswalze führen, woraufhin der Betrieb des jeweiligen Mähdreschers zumindest zeitweise unterbrochen werden muss. Entsprechend ist es ratsam, den Mähdrescher derart umzustellen, dass er für die Bearbeitung des Ernteguts in Abhängigkeit der jeweiligen Ernteparameter geeignet ist.

Das gemäß dem Stand der Technik betriebene Vorgehen weist jedoch mehrere Nachteile auf. Zum einen ist die korrekte bzw. zumindest bestmögliche Einstellung von Betriebsparametern des Mähdreschers in Abhängigkeit jeweils vorliegender Ernteparameter sehr von den individuellen Kenntnissen und Erfahrungen des Maschinenführers abhängig. Unvollständige oder fehlerhafte Kenntnisse können mithin leicht zu einem nicht optimalen Betrieb des Mähdreschers führen. Zum anderen ist die Umstellung bzw. Veränderung von Betriebsparametern des Mähdreschers in aller Regel mit einigem technischen Aufwand verbunden, sodass mehr oder minder aufwendige Umrüstungsarbeiten erforderlich sind, um entsprechende Betriebsparameter möglichst gut den jeweiligen Ernteparameter anzupassen. In Scheu des individuellen Aufwandes kommt es ferner mitunter dazu, dass die Betriebsparameter wider besseres Wissen nicht verändert werden, obwohl jeweils vorliegender Ernteparameter dies eigentlich verlangen. Hierunter leidet dann die Effizienz der Ernte und damit verbunden das Ernteergebnis.

Der vorliegenden Anmeldung liegt mithin die Aufgabe zugrunde, einen Mähdrescher sowie ein Verfahren zu dessen Steuerung bereitzustellen, mittels dessen die Ernte von Getreide in Gegenwart sich ändernder Ernteparameter verbessert werden kann.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den Unteransprüchen 2 bis 13.

Bei dem erfindungsgemäßen Mähdrescher sind die Einzugswalze und das Fahrassistenzsystem miteinander verbunden, insbesondere mittels einer kabellosen oder einer kabelgebundenen Datenleitung, und bilden auf diese Weise gemeinsam einen Einzugswalzenautomat. Dieser ist dazu geeignet, automatisch bzw. selbsttätig auf sich ändernde Ernteparameter zu reagieren, wobei das Fahrassistenzsystem in einer solchen Wirkverbindung mit der Einzugswalze steht, dass mindestens ein Betriebsparameter der Einzugswalze in Abhängigkeit von mindestens einem Ernteparameter automatisch veränderbar ist. Betriebsparameter der Einzugswalze können insbesondere deren Arbeitshöhe, deren Drehzahl und/oder eine Stellung der Einzugsfinger relativ zu dem Walzenkern betreffen. Die Arbeitshöhe beschreibt dabei einen Abstand, sich zwischen dem Schneidtisch und der Rotationsachse der Einzugswalze erstreckt.

Der erfindungsgemäße Mähdrescher hat viele Vorteile. Insbesondere ist es mit ihm möglich, mindestens einen Betriebsparameter der Einzugswalze automatisch, das heißt ohne individuelles Zutun eines Maschinenführers des Mähdreschers, in Abhängigkeit mindestens eines Ernteparameters zu verändern. Somit ist es beispielsweise denkbar, dass eine gesteigerte Feuchtigkeit des Ernteguts registriert wird. Unabhängig davon, ob dem Fahrassistenzsystem diese Informationen händisch mittels Eingabe durch den Maschinenführer oder automatisch mittels einer Sensoreinrichtung zur Verfügung gestellt wird, kann diese Information derart verarbeitet werden, dass mindestens ein Betriebsparameter der Einzugswalze verändert wird. Beispielsweise kann die Arbeitshöhe der Einzugswalze gesteigert und/oder die Stellungen der Einzugsfinger verändert werden. Letzteres kann zum Beispiel derart erfolgen, dass die Einzugsfinger zumindest in einem entsprechenden Teilumfangsbereich, insbesondere einem Arbeitsbereich, weiter über die äußere Mantelfläche des Walzenkerns hinaus vorstehen, das heißt eine Arbeitslänge der Einzugsfinger vergrößert wird. Von besonderer Bedeutung ist dabei, dass das Fahrassistenzsystem dem Maschinenführer die Interpretation der jeweiligen Ernteparameter und eine damit einhergehende Entscheidungsfindung betreffend einer möglichen Veränderung mindestens eines Betriebsparameters der Einzugswalze abnimmt. Diese Abstimmung von Ernteparameter und Betriebsparameter wird hingegen erfindungsgemäß automatisch vorgenommen.

In einer besonders vorteilhaften Ausgestaltung ist hierzu auf dem Datenspeicher mindestens eine Information betreffend eine Beziehung zwischen mindestens einem Betriebsparameter der Einzugswalze und mindestens einem Ernteparameter gespeichert. Dabei ist der mindestens einen Ernteparameter derart mit mindestens einem Betriebsparameter der Einzugswalze verknüpft, dass sich für jeden Wert des jeweiligen Ernteparameters ein zugehöriger Soll-Wert des Betriebsparameters ergibt. Mittels dieser Ausgestaltung ist es möglich, bei Zurverfügungstellen mindestens einer Information betreffend den jeweiligen Ernteparameter automatisch einen zugeordneten Soll-Wert des Betriebsparameters zu erhalten, der sich aufgrund der auf dem Datenspeicher hinterlegten Beziehung ergibt. Insbesondere kann die Datenverarbeitungsanlage auf den Datenspeicher zugreifen und besagte Beziehung auslesen. Im Ergebnis ist das Fahrassistenzsystem schließlich dazu geeignet, den jeweils betroffenen Betriebsparameter der Einzugswalze in Richtung des Soll-Werts zu verändern, der sich aus dem jeweiligen Ernteparameter ergibt. Vorteilhafterweise wird der Betriebsparameter der Einzugswalze derart verändert, dass er schließlich den Soll-Wert annimmt.

Vorteilhafterweise ist mindestens ein Betriebsparameter der Einzugswalze von deren Arbeitshöhe gebildet, wobei die Arbeitshöhe der Einzugswalze, vorzugsweise mittels eines zugeordneten Stellantriebs, veränderbar ist. Wie sich bereits anhand des vorstehend beschriebenen Beispiels ergibt, sind ohne Weiteres Konstellationen denkbar, in denen eine Veränderung der Arbeitshöhe der Einzugswalze je nach vorliegenden Ernteparametern vorteilhaft ist. Insbesondere ist in aller Regel keine eindeutige Arbeitshöhe angebbar, die für sämtliche Erntebedingungen ein bestmögliches Ernteergebnis des Mähdreschers garantiert. Stattdessen können beispielsweise verschiedene Früchte, die es zu ernten gilt, oder sich ändernde Witterungsbedingungen eine Veränderung der Arbeitshöhe der Einzugswalze wünschenswert erscheinen lassen. Mittels eines Stellantriebs kann eine solche Veränderung zudem automatisch, das heißt ohne manuelles mechanisches Eingreifen des Maschinenführers, erfolgen. Insbesondere ist es denkbar, dass das Fahrassistenzsystem die Veränderung der Arbeitshöhe autonom und gegebenenfalls sogar ohne Kenntnis des Maschinenführers vornimmt, sodass der Maschinenführer von dieser Aufgabe vollständig befreit werden kann.

Vorteilhafterweise sind auf dem Datenspeicher Informationen gespeichert, die eine Beziehung zwischen dem Parameter "Arbeitshöhe der Einzugswalze" und dem Ernteparameter "Art des zu erntenden Getreides" und/oder dem Ernteparameter "Durchsatz von Erntegut pro Zeiteinheit" und/oder dem Ernteparameter "Halmlänge der geschnittenen Pflanzen" und/oder dem Ernteparameter "Antriebsdrehmoment der Einzugswalze" enthält. Die genannten Ernteparameter sind im Hinblick auf die Arbeitshöhe der Einzugswalze von besonderer Bedeutung. Somit ist die Ernteleistung des jeweiligen Mähdreschers mittels Veränderung der Arbeitshöhe der Einzugswalze im Zuge einer etwaigen Veränderung einer der genannten Ernteparameter besonders gut beeinflussbar, insbesondere verbesserbar.

In einer weiterhin vorteilhaften Ausgestaltung des erfindungsgemäßen Mähdreschers ist ein Betriebsparameter der Einzugswalze von deren Drehzahl gebildet, wobei die Drehzahl der Einzugswalze veränderbar ist. Hierzu ist es besonders zu bevorzugen, dass auf dem Datenspeicher eine Beziehung zwischen dem Betriebsparameter "Drehzahl der Einzugswalze" und dem Ernteparameter "Art des zu erntenden Getreides" und/oder dem Ernteparameter "Durchsatz von Erntegut pro Zeiteinheit" und/oder dem Ernteparameter "Feuchte des Ernteguts" und/oder dem Ernteparameter "Antriebsdrehmoment der Einzugswalze" gespeichert ist. Im Hinblick auf die beiden Ernteparameter "Art des zu erntenden Getreides" und "Durchsatz von Erntegut pro Zeiteinheit" kann es sich um solche handeln, die von dem Maschinenführer des Mähdreschers vorgegeben werden. Somit ist es denkbar, dass der Maschinenführer beispielsweise zu Beginn eines Arbeitstages dem Fahrassistenzsystem vorgibt, dass heute Weizen geerntet werden wird. Zudem ist es denkbar, dass der Maschinenführer einen bestimmten angestrebten Durchsatz von Erntegut vorgibt, beispielsweise ausgedrückt in Tonnen pro Stunde. Mit diesen Informationen ist der Mähdrescher geeignet, mittels seines Einzugswalzenautomats automatisch den Betriebsparameter der Einzugswalze auf einen Soll-Wert für deren Drehzahl einzustellen, der sich aus der auf dem Datenspeicher hinterlegten Beziehung ergibt. Alternativ oder in Kombination ist es ebenso denkbar, dass entsprechende Ernteparameter automatisch erhoben werden, beispielsweise mittels einer nachstehend beschriebenen Sensoreinrichtung. In diesem Fall muss der Maschinenführer keine weitere Handlung vornehmen, damit sich der erfindungsgemäße Einzugswalzenautomat für einen möglichst optimalen Betrieb des Mähdreschers selbst einstellt.

Weiterhin kann eine solche Ausgestaltung des erfindungsgemäßen Mähdreschers vorteilhaft sein, bei der ein Betriebsparameter der Einzugswalze von einer Stellung der Einzugsfinger gebildet ist. Letztere ist dadurch veränderbar, dass mindestens ein Einzugsfinger, vorzugsweise sämtliche Einzugsfinger, relativ zu dem Walzenkern beweglich sind.

Die "Stellung eines Einzugsfingers" kann insbesondere einen relativen Bezug zwischen den einzelnen Einzugsfingern betreffen, nämlich vornehmlich deren "Spreizwinkel". Letzterer bezeichnet ein bezogen auf einen Querschnitt der Einzugswalze betrachtetes Winkelmaß, um das in Umfangsrichtung betrachtet benachbarte Einzugsfinger voneinander beabstandet sind. Beispielsweise kann der Spreizwinkel 45° betragen. Bei Vorliegen dieses Werts sind zumindest zwei benachbarte Einzugsfinger entlang des Umfangs des Walzenkerns betrachtet um ein Winkelmaß von 45° gegeneinander versetzt angeordnet. Der Spreizwinkel kann insbesondere in einem Teilumfangsbereich der Einzugswalze von Bedeutung sein, in dem ein tatsächlicher Eingriff der Einzugsfinger mit geschnittenen Pflanzen stattfindet, die auf dem Schneidtisch liegen. Dieser Teilumfangsbereich wird im Weiteren als "Arbeitsbereich" bezeichnet, wobei es sich um einen feststehenden Winkelbereich handelt, der unabhängig von der Drehung der Einzugswalze ist. Somit ist es denkbar, dass der Spreizwinkel nicht über den gesamten Umfang des Walzenkerns bzw. der Einzugswalze konstant ist, sondern lediglich innerhalb des Arbeitsbereichs der Einzugswalze vorliegt. Da die Einzugsfinger lediglich innerhalb des Arbeitsbereichs tatsächlich mit dem geschnittenen Pflanzen eingreifen, ist die technische Wirkung des Spreizwinkels auf diesen Arbeitsbereich der Einzugswalze beschränkt. Außerhalb des Arbeitsbereichs ist mithin der zwischen benachbarten Einzugsfingern vorliegende Spreizwinkel von untergeordneter Bedeutung. Mittels Veränderung des Spreizwinkels kann ein Einfluss auf die Förderwirkung der Einzugswalze genommen werden, wobei insbesondere ein umso kleinerer Spreizwinkel eine umso höhere Förderleistung bewirkt.

Weiterhin kann die "Stellung der Einzugsfinger" eine individuelle Arbeitslänge eines jeden Einzugsfingers betreffen, die ein Maß beschreibt, um das ein jeweiliger Einzugsfinger radial über die äußere Mantelfläche des Walzenkerns hinaus vorsteht. Die Arbeitslänge hat unter anderem auf die "Aggressivität" der Einzugswalze Auswirkung, wobei bei einer umso größeren Arbeitslänge die mittels der Einzugswalze bewirkte Förderwirkung umso größer ist. Dies liegt darin begründet, dass die Einzugsfinger innerhalb des vorstehenden beschriebenen Arbeitsbereichs der Einzugswalze im Zuge der Rotation der letzteren um ihre Rotationsachse vergleichsweise nah an dem Schneidtisch entlang fahren und mithin eine Vielzahl einzelner geschnittener Pflanzen erfassen. Die Arbeitslänge muss nicht notwendigerweise einen feststehenden Wert bilden, um den ein jeweiliger Einzugsfinger unabhängig von einer Drehstellung der Einzugswalze über die äußere Mantelfläche des Walzenkerns hinaus vorsteht. Stattdessen kann sich die Arbeitslänge in Abhängigkeit der Drehstellung der Einzugswalze verändern, wobei die Stellung der Einzugsfinger sinnvollerweise in Abhängigkeit davon beeinflusst wird, wie groß die Arbeitslänge innerhalb des vorstehend genannten Arbeitsbereichs, das heißt desjenigen Teilumfangsbereichs, in dem die Einzugswalze unmittelbar auf die geschnittenen Pflanzen einwirkt, ist.

Weiterhin kann die "Stellung der Einzugsfinger" eine Ausrichtung eines jeweiligen einzelnen Einzugsfingers relativ zu dem Walzenkern betreffen. Diese Ausrichtung lässt sich am besten mittels eines Austrittswinkels beschreiben, den der jeweilige Einzugsfinger mit einer an die Mantelfläche des Walzenkerns anliegenden Tangente einschließt, die eine Fußstelle des Einzugsfingers an der Mantelfläche beinhaltet. Der Austrittswinkel beträgt in aller Regel ca. 90° und kann beispielsweise in einem Bereich von ±20° um diesen Wert variiert werden. Vergleichbar zu vorstehender Beschreibung ist der Austrittswinkel insbesondere in einem Arbeitsbereich der Einzugswalze von Bedeutung, in dem der bzw. die betroffenen Einzugsfinger tatsächlich mit den geschnittenen Pflanzen eingreifen.

In einer besonders vorteilhaften Ausgestaltung verfügt die Einzugswalze in ihrem Innenraum über eine Lagereinrichtung, an der zumindest eine Mehrzahl von Einzugsfingern, vorzugsweise sämtliche Einzugsfinger, gemeinsam angeordnet sind. Die Lagereinrichtung ist exzentrisch zu der Rotationsachse der Einzugswalze positioniert und erstreckt sich parallel zu der Rotationsachse. Vorzugsweise ist die Lagereinrichtung um eine eigene Rotationsachse rotierbar gelagert, die sich parallel zu der Rotationsachse der Einzugswalze erstreckt. Die Einzugsfinger, die an der Lagereinrichtung angeordnet sind, erstrecken sich ausgehend von dem Innenraum des Walzenkerns durch die Mantelfläche desselben hindurch nach außen hin. Somit umfasst der Walzenkerns an seiner Mantelfläche eine Vielzahl von Öffnungen, durch die hindurch sich die Einzugsfinger erstrecken.

Die exzentrische Anordnung der Lagereinrichtung bewirkt dabei, dass die an ihr angeordneten Einzugsfinger, die typischerweise alle dieselbe Länge aufweisen, über den Umfang der Einzugswalze hinweg jeweils eine variierende Arbeitslänge aufweisen. Somit versteht es sich, dass ein jeweiliger Einzugsfinger an einer Winkelstelle der Einzugswalze weiter über die äußere Mantelfläche des Walzenkerns hinaus vorsteht, wenn die Lagereinrichtung bezogen auf die Rotationsachse der Einzugswalze in Richtung dieser Winkelstelle exzentrisch zu der Rotationsachse der Einzugswalze angeordnet ist. Umgekehrt steht der Einzugsfinger in einer um 180° gegenüber der genannten Winkelstelle versetzten Winkelstelle weniger über die äußere Mantelfläche des Walzenkerns hinaus vor. Entsprechendes ergibt sich besonders einfach anhand des nachstehenden Ausführungsbeispiels. Die eigenständige drehbare Lagerung der Lagereinrichtung ermöglicht, dass eine aktiv angetriebene Einzugswalze gewissermaßen die Einzugsfinger "mitschleppt", sodass diese gemeinsam mit der Lagereinrichtung um die Rotationsachse der Lagereinrichtung rotiert werden.

Sofern eine Lagereinrichtung in der vorstehend beschriebenen Weise zum Einsatz kommt, kann es weiterhin von besonderem Vorteil sein, wenn diese mit mindestens einem Stellantrieb zusammenwirkt, mittels dessen eine Lage der Lagereinrichtung relativ zu der Rotationsachse der Einzugswalze veränderbar ist. Dies betrifft insbesondere eine Exzentrizität der Lagereinrichtung bezogen auf die Rotationsachse der Einzugswalze. Mittels Veränderung besagter Exzentrizität kann ein unmittelbarer Einfluss auf die Arbeitslänge der Einzugsfinger genommen werden. Somit kann beispielsweise mittels einer Verlagerung der Lagereinrichtung näher an die Rotationsachse der Einzugswalze heran die Arbeitslänge, um die die Einzugsfinger über die äußere Mantelfläche des Walzenkerns hinaus nach außen hin vorstehen, in einem Teilumfangsbereich der Einzugswalze reduziert und in dem gegenüberliegenden Teilumfangsbereich vergrößert werden. Wie vorstehend bereits ausgeführt, ist es für die technische Wirkung der Einzugswalze von besonderer Bedeutung, welchen Betrag die Arbeitslänge in dem Arbeitsbereich der Einzugswalze annimmt, in dem selbige grundsätzlich mit den geschnittenen Pflanzen eingreifen kann. Der Stellantrieb kann insbesondere unmittelbar auf die Lagereinrichtung einwirken, sodass diese innerhalb des Innenraums des Walzenkerns insgesamt verlagerbar ist.

Vorteilhafterweise steht besagter Stellantrieb unmittelbar mit dem Fahrassistenzsystem in Verbindung, sodass der Stellantrieb mittels des Fahrassistenzsystems ansteuerbar ist. Bei dieser Ausführung kann das Fahrassistenzsystem die Steuerung der Stellung der Einzugsfinger besonders einfach automatisch und selbsttätig vornehmen, ohne auf einen Eingriff des Maschinenführers des Mähdreschers angewiesen zu sein.

Vorteilhafterweise ist auf dem Datenspeicher eine Beziehung zwischen dem Betriebsparameter "Stellung der Einzugsfinger" und dem Ernteparameter "Art des zu erntenden Getreides" und/oder dem Ernteparameter "Feuchte des Ernteguts" und/oder dem Ernteparameter "Durchsatz von Erntegut" und/oder dem Ernteparameter "Halmlänge der geschnittenen Pflanzen" und/oder dem Ernteparameter "Antriebsdrehmoment der Einzugswalze" gespeichert. Die Hinterlegung einer solchen Beziehung ist besonders vorteilhaft, da die genannten Ernteparameter jeweils für sich alleine betrachtet eine Auswirkung auf das Ergebnis des Erntevorgangs haben können, das in diesen Fällen besonders gut mittels einer Veränderung der Stellung der Einzugsfinger beeinflussbar ist.

Den erfindungsgemäßen Mähdrescher weiter ausgestaltend umfasst das Fahrassistenzsystem mindestens eine Sensoreinrichtung, mittels derer zumindest ein Ernteparameter erfassbar ist. Die Sensoreinrichtung ist vorzugsweise mittels einer kabellosen oder kabelgebundenen Datenleitung mit der Datenverarbeitungsanlage und/oder dem Datenspeicher verbunden. Auf diese Weise können mittels der Sensoreinrichtung zur Verfügung gestellte Daten unmittelbar verarbeitet und/oder für eine spätere Verarbeitung gespeichert werden. Die Sensoreinrichtung kann grundsätzlich örtlich unabhängig von dem restlichen Fahrassistenzsystem an den Mähdrescher angeordnet sein. Somit ist es denkbar, dass mindestens ein zu der Sensoreinrichtung gehörendes Sensorelement an oder in dem Schrägförderer angeordnet ist, mittels dessen die geschnittenen Pflanzen in Richtung der Dreschtrommel gefördert werden. Eine solche Sensoreinrichtung kann beispielsweise Informationen betreffend die Art des geernteten Getreides und/oder eine Feuchte des Ernteguts und/oder eine Halmlänge der geschnittenen Pflanzen und/oder einen Durchsatz von Erntegut erfassen. Weiterhin ist es denkbar, mindestens eine Sensoreinrichtung mit einer Kamera auszuführen, mittels derer das Erntegut optisch erfassbar ist. Insbesondere ist es denkbar, eine seitliche Verteilung der geschnittenen Pflanzen unmittelbar vor der Einzugswalze zu überwachen, um eventuelle Konzentrationen der Pflanzen in Bereichen der Einzugswalze vorhersagen zu können. Dies könnte beispielsweise Einfluss auf eine sinnvolle Arbeitshöhe der Einzugswalze habe, die in Kenntnis der genannten Information mittels des Fahrassistenzsystems automatisch verändert werden könnte. Anderen Arten von Sensoreinrichtungen sind selbstverständlich ebenso denkbar.

Die Verwendung einer oder mehrerer Sensoreinrichtungen bietet den besonderen Vorteil, dass der Mähdrescher insgesamt autonom die Steuerung der Einzugswalze bzw. eine Veränderung eines oder mehrerer Betriebsparameter derselben vornehmen kann, ohne dass er hierzu auf Informationen angewiesen ist, die unmittelbar von den Maschinenführer stammen und von ihm beigebracht werden müssen. Das mit der Sensoreinrichtung ausgestattete Fahrassistenzsystem kann hingegen fortwährend bestimmte Ernteparameter erfassen und mindestens einen Betriebsparameter der Einzugswalze im Hinblick auf eine Verbesserung der Ernteleistung selbsttätig verbessern.

Die erfindungsgemäße Vorrichtung wird nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Ein Auszug aus den Querschnitt gemäß Figur 1 in einem Frontbereich des Mähdreschers,
- Fig. 3:: Ein schematischer Längsschnitt durch eine Einzugswalze des Mähdreschers gemäß Figur 1,
- Fig. 4:: Ein schematischer Querschnitt durch die Einzugswalze gemäß Figur 3 und
- Fig. 5:: Ein schematischer Querschnitt durch die Einzugswalze gemäß Figur 4, wobei sich eine Lagereinrichtung in einer gegenüber Figur 4 veränderten Stellung befindet.

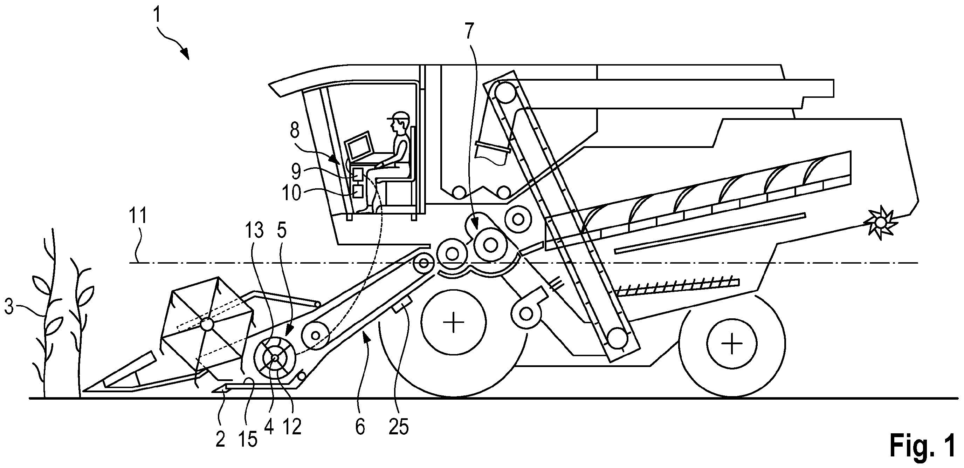

Das Ausführungsbeispiel, das in den **Figuren 1 bis 5** veranschaulicht ist, umfasst einen erfindungsgemäßen Mähdrescher **1,** der mit einem Mähbalken **2,** einer Einzugswalze **5,** einem Schrägförderer **6** sowie einer Dreschtrommel **7** ausgestattet ist. Ferner verfügt der Mähdrescher **1** über weitere Arbeitsorgane, die für die vorliegende Erfindung jedoch nicht relevant sind und daher nicht näher beschrieben werden. Mittels des Mailbalkens **2** ist der Mähdrescher **1** dazu geeignet, Pflanzen **3,** beispielsweise Mais, zu schneiden. Die geschnittenen Pflanzen **3** fallen dadurch auf einen Schneidtisch **15,** über den die Pflanzen **3** dem Schrägförderer **6** zugeführt werden. Um die geschnittenen Pflanzen **3** aktiv zu fördern, kommt die genannte Einzugswalze **5** zum Einsatz. Bei dieser handelt es sich um ein lang gestrecktes Bauteil, das sich quer zu einer Längsachse **11** des Mähdreschers **1** erstreckt. Die Einzugswalze **5** ist um eine mittige Rotationsachse **4** drehantreibbar an dem Mähdrescher **1** gelagert und kann insbesondere mittels Antriebsriemen mit einem Antriebsdrehmoment versorgt werden. Die Einzugswalze **5** verfügt über einen Walzenkern **12** sowie über zwei verschiedene Arten von Eingriffelementen, die sich radial bezogen auf die Rotationsachse **4** über eine äußere Mantelfläche **14** des Walzenkerns **12** hinaus erstrecken.

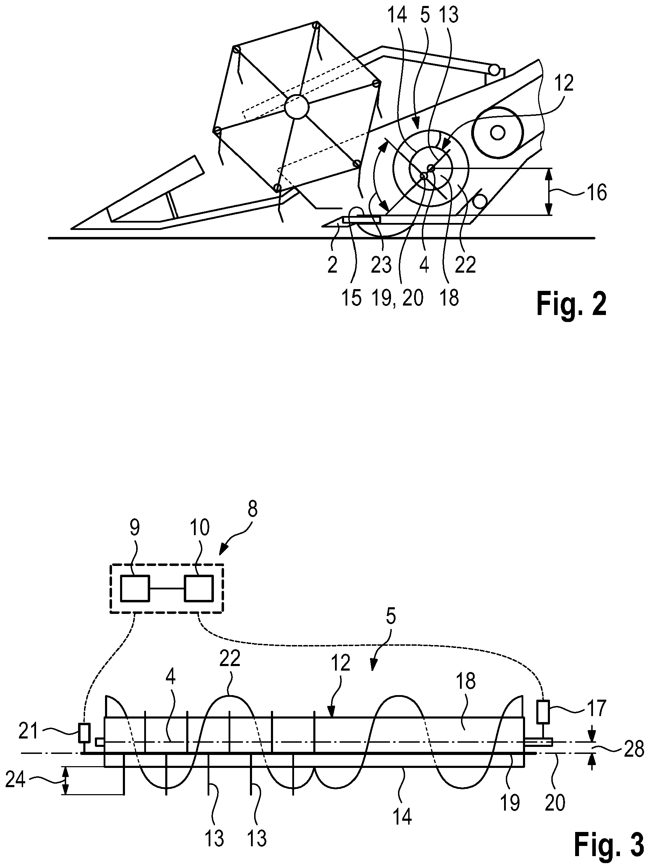

Bei dem ersten Eingriffelement handelt es sich um eine Schneckenwendel **22,** die sich besonders gut anhand der **Figuren 2 und 3** ergibt. Mittels der Schneckenwendel **22** ist die Einzugswalze **5** dazu geeignet, auf dem Schneidtisch **15** abgelegte Pflanzen **3** in einem Mittelbereich des Mähdreschers **1** zusammenzuführen. Dies ist in aller Regel erforderlich, da eine quer zu der Längsachse **11** des Mähdreschers **1** gemessene Breite des Schrägförderers **6** typischerweise deutlich geringer ist als eine Breite des Mähbalkens **2.** Mithin müssen die geschnittenen Pflanzen **3** zunächst mittig zusammengeführt werden, sodass sie schließlich dem Schrägförderer **6** zugeleitet werden können. Die Schneckenwendel **22** ist ausgehend von den sich gegenüberliegenden Enden der Einzugswalze **5** gegenläufig gewendelt ausgeführt, sodass sich jeweils eine Förderwirkung quer zu der Längsachse **11** des Mähdreschers **1** in Richtung des Mittelbereichs desselben ergibt.

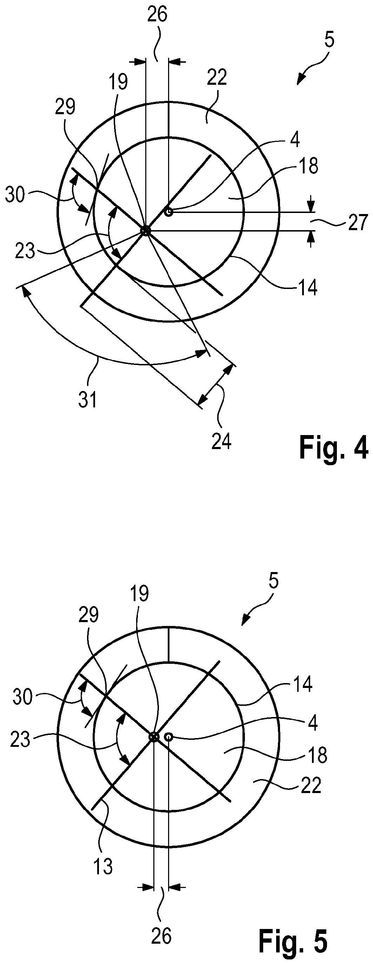

Das zweite Eingriffelement der Einzugswalze **5** hier von einer Mehrzahl von Einzugsfingern **13** gebildet, bei denen es sich hier um lang gestreckte Stäbe handelt. Diese erstrecken sich ausgehend von einer gemeinsamen Lagereinrichtung **19,** die sich besonders gut anhand der **Figuren 4 und 5** ergibt. Besagte Lagereinrichtung **19** ist innerhalb des Walzenkerns **12** in dessen Innenraum **18** angeordnet und erstreckt sich parallel zu der Rotationsachse **4** der Einzugswalze **5.** Die Einzugsfinger **13** erstrecken sich jeweils ausgehend von der Lagereinrichtung **19** weg in einer Ebene senkrecht zu der Rotationsachse **4** der Einzugswalze **5** nach außen hin, wobei sie die äußere Mantelfläche **14** des Walzenkerns **12** durchdringen. Hierzu verfügt der Walzenkern **12** über entsprechende Öffnungen **29.** Die Lagereinrichtung **19** ist ihrerseits ebenfalls drehbar gelagert, wobei sich ihre Rotationsachse **20** parallel zu der Rotationsachse **4** der Einzugswalze **5** erstreckt. Weiterhin ist die Lagereinrichtung **19** exzentrisch bezogen auf die Rotationsachse **4** gelagert, wobei eine Gesamtexzentrizität **28** vorliegt. Diese lässt sich in einer Kombination aus einer horizontalen Exzentrizität **26** und einer vertikalen Exzentrizität **27** ausdrücken, wie sich besonders gut anhand von **Figur 4** ergibt.

Die genannte Gesamtexzentrizität **28** der Lagereinrichtung **19** bezogen auf die Rotationsachse **4** bewirkt, dass die Einzugsfinger **13** trotz gleicher Längen je nach Drehstellung der Einzugswalze **5** verschiedene Arbeitslängen **24** aufweisen. Die Arbeitslänge **24** beschreibt dabei diejenige Länge, um die ein jeweiliger Einzugsfinger **13** über die Mantelfläche **14** des Walzenkerns **12** hinaus vorsteht. Wie vorstehend bereits ausgeführt, ist die Arbeitslänge **24** der Einzugsfinger **13** in technischer Hinsicht insbesondere in einem Arbeitsbereich **31** von Bedeutung, in dem die Einzugswalze **5** - und mithin auch deren Einzugsfinger **13** - mit den geschnittenen Pflanzen **3,** die auf dem Schneidtisch **15** aufliegen, eingreift. In technischer Sicht ist es vor allem sinnvoll, wenn die Einzugsfinger **13** in einem sich in Rotationsrichtung der Einzugswalze **5** an den Arbeitsbereich **31** anschließenden Teilumfangsbereich möglichst wenig bzw. über ein möglichst geringes Maß über die Mantelfläche **14** des Walzenkerns **12** hinaus vorstehen, um die geschnittenen Pflanzen **3** nicht in Rotationsrichtung der Einzugswalze **5** nach oben mitzureißen.

Der erfindungsgemäße Mähdrescher **1** ist ferner mit einem Fahrassistenzsystem **8** ausgestattet, das eine Datenverarbeitungsanlage **9** sowie einen damit verbundenen Datenspeicher **10** umfasst. Das Fahrassistenzsystem **8** steht in Wirkverbindung mit der Einzugswalze **5** und bildet gemeinsam mit ihr einen Einzugswalzenautomat. In dieser Verbindung ist das Fahrassistenzsystem **8** dazu geeignet, mindestens einen Betriebsparameter der Einzugswalze **5** zu verändern und auf diese Weise auf sich ändernde Ernteparameter zu reagieren. Entsprechende Beispiele und Zusammenhänge sind vorstehend bereits ausgeführt. Ein wesentlicher Betriebsparameter der Einzugswalze **5,** der automatisch mittels des Fahrassistenzsystems **8** veränderbar ist, besteht in einer Arbeitshöhe **16** der Einzugswalze **5,** die sich in vertikale Richtung gemessen zwischen einer Oberfläche des Schneidtischs **15** und der Rotationsachse **4** der Einzugswalze **5** ergibt. Mit einer Veränderung der Arbeitshöhe **16** kann unmittelbar ein Förderspalt verändert werden, der sich zwischen dem Schneidtisch **15** und einer jeweiligen tiefsten Stelle der Einzugswalze **5** ergibt. Je nachdem, welche Erntebedingungen individuell vorliegen (Art des Getreides, feuchte des Ernteguts etc.), können unterschiedliche Arbeitshöhen **16** zu bevorzugen sein, um ein möglichst gutes Ernteergebnis zu erhalten.

Weiterhin kann das Fahrassistenzsystem **8** dazu in der Lage sein, eine Drehzahl der Einzugswalze **5** zu beeinflussen bzw. zu verändern und auf diese Weise auf sich ändernde Erntebedingungen anzupassen. Ferner kann eine Stellung der Einzugsfinger **13** verändert werden, wobei in dem gezeigten Beispiel in besonders einfacher Weise lediglich die Lagereinrichtung **19,** an der die Einzugsfinger **13** gemeinsam gelagert sind, relativ zu der übrigen Einzugswalze **5** bewegt werden muss. Insbesondere kann die Gesamtexzentrizität **28** verändert werden; ebenso kann es von Bedeutung sein, in welcher Winkelausrichtung sich die Lagereinrichtung **19** bezogen auf die Rotationsachse **4** der Einzugswalze **5** befindet. Die Einstellung der Gesamtexzentrizität **28** hat unmittelbaren Einfluss auf die Arbeitslänge **24,** wie sich besonders gut anhand der **Figuren 4 und 5** ergibt. Ferner ist mittels einer Veränderung der Winkelausrichtung der Lagereinrichtung **19** bezogen auf die Rotationsachse **4** ein Spreizwinkel **23** zwischen benachbarten Einzugsfingern **13** veränderbar. Dies liegt darin begründet, dass die Öffnungen **29** in der Mantelfläche **14** des Walzenkerns **12** festgelegt sind, sodass sich mit einer Veränderung der Lage der Lagereinrichtung **19** bezogen auf die Öffnungen **29** ein Austrittswinkel **30** verändert, unter dem ein jeweiliger Einzugsfinger **13** bezogen auf eine an die Öffnung **29** angelegte Tangente des Walzenkerns **12** aus selbigem austritt. Mit einer Veränderung dieses Austrittswinkels **30** bezogen auf jeden einzelnen Einzugsfinger **13** wird auch der Spreizwinkel **23** zwischen jeweils benachbarten Einzugsfingern **13** verändert. Die Anordnung der Einzugsfinger **13** an einer gemeinsamen Lagereinrichtung **19** ermöglicht es mithin, die Stellung der Einzugsfinger **13** mittels einer einzigen Stellgröße, nämlich einer Position der Lagereinrichtung **19** bezogen auf die Rotationsachse **4** der Einzugswalze **5,** in besonders einfacher Weise in mehrerlei Hinsicht zu verändern und zu beeinflussen.

In besonders vorteilhafter Weise verfügt der erfindungsgemäße Mähdrescher **1** in dem gezeigten Beispiel über zwei Stellantriebe **17, 21,** die jeweils mit dem Fahrassistenzsystem **8** in Wirkverbindung stehen. Insbesondere sind die Stellantrieb **17, 21** kabellos oder kabelgebunden mit dem Fahrassistenzsystem **8** verbunden, sodass letzteres dazu geeignet ist, diese unmittelbar anzusteuern und auf diese Weise Änderungen von Betriebsparametern der Einzugswalze **5** automatisch vorzunehmen. Der Stellantrieb **17** wirkt unmittelbar auf eine Lagerachse der Einzugswalze **5,** sodass diese in ihrer Position relativ zu dem Schneidtisch **15** veränderbar ist. Auf diese Weise kann die Arbeitshöhe **16** besonders einfach automatisch verändert werden. Der Stellantrieb **21** wirkt auf die Lagereinrichtung **19,** sodass diese in der vorstehend beschriebenen Weise relativ zu der übrigen Einzugswalze **5** bewegt werden kann.

Informationen, die eine Veränderung eines jeweiligen Betriebsparameters der Einzugswalze **5** in Abhängigkeit eines sich ändernden Ernteparameters betreffen, sind in dem gezeigten Beispiel auf dem Datenspeicher **10** hinterlegt. Diese Informationen umfassen Beziehungen zwischen einem jeweiligen Ernteparameter und einem damit verbundenen Betriebsparameter, wobei jeweiligen Werten für den Betriebsparameter Soll-Werte des Betriebsparameters zugeordnet sind. In dem vorliegenden Beispiel ist auf dem Datenspeicher **10** eine Vielzahl von Beziehungen hinterlegt, wobei die Veränderung eines einzelnen Ernteparameters insbesondere dazu führen kann, dass sich gleichzeitig die Soll-Werte einer Mehrzahl von Betriebsparametern ändern. In einem solchen Fall kann das Fahrassistenzsystem **8** automatisch besagte Betriebsparameter verändern, ohne dass es hierfür der Kontrolle oder Einflussnahme des Maschinenführers des Mähdreschers 1 bedarf.

Die vorliegende Ausgestaltung des erfindungsgemäßen Mähdreschers **1** ist insoweit besonders vorteilhaft, als sie eine Sensoreinrichtung **25** umfasst. Diese umfasst wiederum eine Mehrzahl von in den Figuren nicht dargestellter Sensorelemente, die an dem Schrägförderer **6** bzw. einen Förderkanal desselben positioniert sind. Diese Sensorelemente sind dazu geeignet, verschiedene Ernteparameter zu erfassen, beispielsweise die Art des geernteten Getreides, die Feuchte des Ernteguts, die Halmlänge der geschnittenen Pflanzen **3** usw. Diese Information werden ausgehend von der Sensoreinrichtung **25** kabelgebunden oder kabellos an die Datenverarbeitungsanlage **9** und/oder den Datenspeicher **10** weitergeleitet und können sodann verarbeitet werden. In dieser Konstellation ist der Maschinenführer des Mähdreschers **1** von der Aufgabe entbunden, Daten über entsprechende Ernteparameter periodisch oder fortwährend zu erheben und dem Fahrassistenzsystem **8** zur Verfügung zu stellen. Die Steuerung der Einzugswalze **5** kann mithin vollständig eigenständig mittels des Fahrassistenzsystems **8** erfolgen.

### Bezugszeichenliste

- 1: Mähdrescher
- 2: Mähbalken
- 3: Pflanze
- 4: Rotationsachse
- 5: Einzugswalze
- 6: Schrägförderer
- 7: Dreschtrommel
- 8: Fahrassistenzsystem
- 9: Datenverarbeitungsanlage
- 10: Datenspeicher
- 11: Längsachse
- 12: Walzenkern
- 13: Einzugsfinger
- 14: Mantelfläche
- 15: Schneidtisch
- 16: Arbeitshöhe
- 17: Stellantrieb
- 18: Innenraum
- 19: Lagereinrichtung
- 20: Rotationsachse
- 21: Stellantrieb
- 22: Schneckenwendel
- 23: Spreizwinkel
- 24: Arbeitslänge
- 25: Sensoreinrichtung
- 26: Exzentrizität
- 27: Exzentrizität
- 28: Gesamtexzentrizität
- 29: Öffnung
- 30: Austrittswinkel

## Patentansprüche

1. Mähdrescher (1) zur Ernte von Getreide, umfassend
- einen Mähbalken (2) zum Schneiden von zu erntenden Pflanzen (3),
- eine um eine Rotationsachse (4) drehantreibbare Einzugswalze (5) zur Förderung der geschnittenen Pflanzen (3) in Richtung eines Schrägförderers (6),
- einen Schrägförderer (6) zur Förderung der geschnittenen Pflanzen (3) in Richtung einer Dreschtrommel (7), mittels derer von den geschnittenen Pflanzen (3) Früchte abtrennbar ist, sowie
- mindestens ein Fahrassistenzsystem (8), das mindestens eine Datenverarbeitungsanlage (9) und mindestens einen Datenspeicher (10) umfasst,
wobei die Einzugswalze (5) einen langgestreckten, sich quer zu einer Längsachse (11) des Mähdreschers (1) erstreckenden Walzenkern (12) aufweist,
wobei die Einzugswalze (5) mit einer Mehrzahl von Einzugsfingern (13) ausgestattet ist, die - in einem im Querschnitt der Einzugswalze (5) betrachtet - zumindest in einem Teilumfangsbereich der Einzugswalze (5) radial über eine äußere Mantelfläche (14) des Walzenkerns (12) hinaus vorstehen,
wobei die Einzugswalze (5) in einer vertikal, ausgehend von einer Oberseite eines Schneidtischs (15) gemessenen Arbeitshöhe (16) angeordnet ist,
**dadurch gekennzeichnet, dass**
die Einzugswalze (5) und das Fahrassistenzsystem (8) derart miteinander verbunden sind, dass sie gemeinsam als Einzugswalzenautomat zusammenwirken,
wobei mittels des Fahrerassistenzsystems (8) mindestens ein Betriebsparameter der Einzugswalze (5) in Abhängigkeit von mindestens einem Ernteparameter automatisch und unabhängig von weiteren Betriebsparametern des Mähdreschers veränderbar ist.

2. Mähdrescher (1) nach Anspruch 1, **dadurch gekennzeichnet, dass** auf dem Datenspeicher (10) mindestens eine Information betreffend eine Beziehung zwischen mindestens einem Betriebsparameter der Einzugswalze (5) und mindestens einem Ernteparameter gespeichert ist, die in Abhängigkeit des Ernteparameters einen Soll-Wert für den Betriebsparameter definiert, sodass mittels Zurverfügungstellens mindestens einer Information betreffend den Ernteparameter die Datenverarbeitungsanlage (9) mittels Zugriffs auf den Datenspeicher (10) den dem Ernteparameter zugeordneten Soll-Wert des Betriebsparameters auslesen und sodann den jeweiligen Betriebsparameter der Einzugswalze (5) in Richtung des Soll-Werts verändern kann.

3. Mähdrescher (1) nach Anspruch 1 oder 2, **dadurch gekennzeichnet, dass** ein Betriebsparameter der Einzugswalze (5) von deren Arbeitshöhe (16) gebildet ist, wobei die Arbeitshöhe (16) der Einzugswalze (5) veränderbar ist, vorzugsweise mittels eines Stellantriebs (17).

4. Mähdrescher (1) nach Anspruch 3, **dadurch gekennzeichnet, dass** der Stellantrieb (17) in Wirkverbindung mit dem Fahrassistenzsystem (8) steht, sodass der Stellantrieb (17) mittels des Fahrassistenzsystems (8) ansteuerbar ist.

5. Mähdrescher (1) nach den Ansprüchen 2 und 3 oder 2 und 4, **dadurch gekennzeichnet, dass** auf dem Datenspeicher (10) eine Beziehung zwischen dem Betriebsparameter "Arbeitshöhe (16) der Einzugswalze (5)" und dem Ernteparameter "Art des zu erntenden Getreides" und/oder dem Ernteparameter "Durchsatz von Erntegut pro Zeiteinheit" und/oder dem Ernteparameter "Halmlänge der geschnittenen Pflanzen (3)" und/oder dem Ernteparameter "Antriebsdrehmoment der Einzugswalze" gespeichert ist.

6. Mähdrescher (1) nach einem der Ansprüche 1 bis 5, **dadurch gekennzeichnet, dass** ein Betriebsparameter der Einzugswalze (5) von deren Drehzahl gebildet ist, wobei die Drehzahl der Einzugswalze (5) veränderbar ist.

7. Mähdrescher (1) nach den Ansprüchen 2 und 6, **dadurch gekennzeichnet, dass** auf dem Datenspeicher (10) eine Beziehung zwischen dem Betriebsparameter "Drehzahl der Einzugswalze (5)" und dem Ernteparameter "Art des zu erntenden Getreides" und/oder dem Ernteparameter "Durchsatz von Erntegut pro Zeiteinheit" und/oder dem Ernteparameter "Feuchte des Ernteguts" und/oder dem Ernteparameter "Antriebsdrehmoment der Einzugswalze" gespeichert ist.

8. Mähdrescher (1) nach einem der Ansprüche 1 bis 7, **dadurch gekennzeichnet, dass** ein Betriebsparameter der Einzugswalze (5) von einer Stellung der Einzugsfinger (13) gebildet ist, wobei die Stellung der Einzugsfinger (13) relativ zu dem Walzenkern (12) veränderbar ist.

9. Mähdrescher (1) nach Anspruch 8, **dadurch gekennzeichnet, dass** eine Mehrzahl von Einzugsfingern (13) in einem Innenraum (18) des Walzenkerns (12) gemeinsam an einer Lagereinrichtung (19) angeordnet sind, die exzentrisch zu der Rotationsachse (4) der Einzugswalze (5) angeordnet ist, wobei die Lagereinrichtung (19) vorzugsweise um eine zu der Rotationsachse (4) der Einzugswalze (5) parallele Rotationsachse (20) rotierbar gelagert ist.

10. Mähdrescher (1) nach Anspruch 9, **gekennzeichnet durch** mindestens einen Stellantrieb (21), mittels dessen eine Lage der Lagereinrichtung (19) relativ zu der Rotationsachse (4) der Einzugswalze (5) veränderbar ist, vorzugsweise eine Exzentrizität der Lagereinrichtung (19) bezogen auf die Rotationsachse (4) der Einzugswalze (5) veränderbar ist, wobei der Stellantrieb (21) vorzugsweise mit dem Fahrassistenzsystem (8) in Wirkverbindung steht, sodass der Stellantrieb (21) mittels des Fahrassistenzsystems (8) ansteuerbar ist.

11. Mähdrescher (1) nach den Ansprüchen 2 und 8 oder 2 und 9 oder 2 und 10, **dadurch gekennzeichnet, dass** auf dem Datenspeicher (10) eine Beziehung zwischen dem Betriebsparameter "Stellung der Einzugsfinger (13)" und dem Ernteparameter "Art des zu erntenden Getreides" und/oder dem Ernteparameter "Feuchte des Ernteguts" und/oder dem Ernteparameter "Durchsatz von Erntegut" und/oder dem Ernteparameter "Halmlänge der geschnittenen Pflanzen (3)" und/oder dem Ernteparameter "Antriebsdrehmoment der Einzugswalze" gespeichert ist.

12. Mähdrescher (1) nach einem der Ansprüche 1 bis 11, **dadurch gekennzeichnet, dass** das Fahrassistenzsystem (8) mindestens eine Sensoreinrichtung (22) umfasst, mittels derer zumindest ein Ernteparameter erfassbar ist, wobei mittels der Sensoreinrichtung (22) erfasste Daten an die Datenverarbeitungsanlage (9) und/oder den Datenspeicher (10) leitbar sind.

13. Mähdrescher (1) nach Anspruch 12, **dadurch gekennzeichnet, dass** mindestens eine Sensoreinrichtung (22) dazu ausgebildet ist, eine Arts zu des zu erntenden Getreides und/oder Feuchte des Ernteguts und/oder einen Durchsatz von Erntegut pro Zeiteinheit zu erfassen.

## Claims

1. Combine harvester (1) for harvesting cereals, comprising
- a cutter bar (2) for cutting plants (3) to be harvested,
- a feed roller (5), which can be driven in rotation about an axis of rotation (4), for conveying the cut plants (3) in the direction of an inclined conveyor (6),
- an inclined conveyor (6) for conveying the cut plants (3) in the direction of a threshing drum (7), by means of which fruit can be separated from the cut plants (3), and
- at least one driving assistance system (8) comprising at least one data processing system (9) and at least one data memory (10),
wherein the feed roller (5) has an elongated roller core (12) extending transversely to a longitudinal axis (11) of the combine harvester (1),
wherein the feed roller (5) is equipped with a plurality of feed fingers (13) which - viewed in cross-section of the feed roller (5) - project radially beyond an outer circumferential surface (14) of the roller core (12) at least in a partial circumferential region of the feed roller (5),
wherein the feed roller (5) is arranged at a working height (16) measured vertically, starting from an upper side of a cutting table (15),
**characterised in that**
the feed roller (5) and the drive assistance system (8) are connected to each other in such a way that they work together as an automatic feed roller,
wherein at least one operating parameter of the feed roller (5) can be changed automatically and independently of other operating parameters of the combine harvester by means of the driver assistance system (8) as a function of at least one harvesting parameter.

2. Combine harvester (1) according to claim 1, **characterised in that** at least one piece of information relating to a relationship between at least one operating parameter of the feed roller (5) and at least one harvesting parameter is stored on the data memory (10), which defines a target value for the operating parameter as a function of the harvesting parameter, so that by making available at least one piece of information relating to the harvesting parameter, the data processing system (9) can read out the target value of the operating parameter assigned to the harvesting parameter by accessing the data memory (10) and can then change the respective operating parameter of the feed roller (5) in the direction of the target value.

3. Combine harvester (1) according to claim 1 or 2, **characterised in that** an operating parameter of the feed roller (5) is formed by its working height (16), the working height (16) of the feed roller (5) being variable, preferably by means of an actuator (17).

4. Combine harvester (1) according to claim 3, **characterised in that** the actuator (17) is operatively connected to the driving assistance system (8), so that the actuator (17) can be controlled by means of the driving assistance system (8).

5. Combine harvester (1) according to claims 2 and 3 or 2 and 4, **characterised in that** a relationship between the operating parameter "working height (16) of the feed roller (5)" and the harvesting parameter "type of grain to be harvested" and/or the harvesting parameter "throughput of crop per unit of time" and/or the harvesting parameter "stalk length of the cut plants (3)" and/or the harvesting parameter "drive torque of the intake roller" is stored in the data memory (10).

6. Combine harvester (1) according to one of claims 1 to 5, **characterised in that** an operating parameter of the feed roller (5) is formed by its rotational speed, the rotational speed of the feed roller (5) being variable.

7. Combine harvester (1) according to claims 2 and 6, **characterised in that** a relationship between the operating parameter "speed of the feed roller (5)" and the harvesting parameter "type of grain to be harvested" and/or the harvesting parameter "throughput of crop per unit of time" and/or the harvesting parameter "moisture of the crop" and/or the harvesting parameter "drive torque of the intake roller" is stored in the data memory (10).

8. Combine harvester (1) according to one of claims 1 to 7, **characterised in that** an operating parameter of the feed roller (5) is formed by a position of the intake fingers (13), the position of the intake fingers (13) being variable relative to the roller core (12).

9. Combine harvester (1) according to claim 8, **characterised in that** a plurality of feed fingers (13) are arranged together in an inner space (18) of the roller core (12) on a bearing device (19) which is arranged eccentrically to the axis of rotation (4) of the feed roller (5), the bearing device (19) preferably being mounted rotatably about an axis of rotation (20) parallel to the axis of rotation (4) of the feed roller (5).

10. Combine harvester (1) according to claim 9, **characterised by** at least one actuating drive (21), by means of which a position of the bearing device (19) relative to the axis of rotation (4) of the feed roller (5) can be changed, preferably an eccentricity of the bearing device (19) relative to the axis of rotation (4) of the feed roller (5) can be changed, wherein the actuator (21) is preferably operatively connected to the travelling assistance system (8), so that the actuator (21) can be controlled by means of the travelling assistance system (8).

11. Combine harvester (1) according to claims 2 and 8 or 2 and 9 or 2 and 10, **characterised in that** a relationship between the operating parameter "position of the intake fingers (13)" and the harvesting parameter "type of grain to be harvested" and/or the harvesting parameter "moisture of the harvested material" and/or the harvesting parameter "throughput of harvested material" and/or the harvesting parameter "stalk length of the cut plants (3)" and/or the harvesting parameter "drive torque of the intake roller" is stored in the data memory (10).

12. Combine harvester (1) according to one of claims 1 to 11, **characterised in that** the driving assistance system (8) comprises at least one sensor device (22), by means of which at least one harvesting parameter can be detected, wherein data detected by means of the sensor device (22) can be transmitted to the data processing system (9) and/or the data memory (10).

13. Combine harvester (1) according to claim 12, **characterised in that** at least one sensor device (22) is designed to detect an art of the grain to be harvested and/or moisture of the harvested material and/or a throughput of harvested material per unit of time.

## Revendications

1. Moissonneuse-batteuse (1) destinée à la récolte de céréales, comprenant
- une barre de coupe (2) pour couper des plantes à récolter (3),
- un rouleau d'amenée (5) pouvant être entraîné en rotation autour d'un axe de rotation (4) et destiné à transporter les plantes coupées (3) en direction d'un convoyeur incliné (6),
- un convoyeur incliné (6) destiné à transporter les plantes coupées (3) en direction d'un tambour batteur (7) permettant de séparer les fruits des plantes coupées (3), ainsi que
- au moins un système d'assistance au conducteur (8) qui comprend au moins une unité de traitement de données (9) et au moins une mémoire de données (10),
dans laquelle le rouleau d'amenée (5) présente un noyau de rouleau (12) allongé qui s'étend transversalement à un axe longitudinal (11) de la moissonneuse-batteuse (1),
dans laquelle le rouleau d'amenée (5) est doté d'une pluralité de doigts d'amenée (13) qui - vus en coupe transversale du rouleau d'amenée (5) - dépassent radialement par rapport à une surface enveloppe (14) extérieure du noyau de rouleau (12), au moins dans une zone périphérique partielle du rouleau d'amenée (5),
dans laquelle le rouleau d'amenée (5) est disposé à une hauteur de travail (16) mesurée verticalement en partant d'une face supérieure d'une table de coupe (15),
**caractérisée en ce que**
le rouleau d'amenée (5) et le système d'assistance au conducteur (8) sont reliés entre eux de manière telle qu'ils coopèrent ensemble comme automate de rouleau d'amenée,
le système d'assistance au conducteur (8) permettant de modifier au moins un paramètre de fonctionnement du rouleau d'amenée (5) en fonction d'au moins un paramètre de récolte, de manière automatique et indépendamment d'autres paramètres de fonctionnement de la moissonneuse-batteuse.

2. Moissonneuse-batteuse (1) selon la revendication 1, **caractérisée en ce qu'**au moins une information concernant une relation entre au moins un paramètre de fonctionnement du rouleau d'amenée (5) et au moins un paramètre de récolte est stockée sur la mémoire de données (10) et définit une valeur de consigne pour le paramètre de fonctionnement, en fonction du paramètre de récolte, de sorte que la mise à disposition d'au moins une information concernant le paramètre de récolte permet à l'unité de traitement de données (9), du fait de l'accès à la mémoire de données (10), de lire la valeur de consigne du paramètre de fonctionnement attribuée au paramètre de récolte et de modifier ensuite le paramètre de fonctionnement respectif du rouleau d'amenée (5), dans le sens de la valeur de consigne.

3. Moissonneuse-batteuse (1) selon la revendication 1 ou 2, **caractérisée en ce qu'**un paramètre de fonctionnement du rouleau d'amenée (5) est constitué de la hauteur de travail (16) de celui-ci, la hauteur de travail (16) du rouleau d'amenée (5) pouvant être modifiée, de préférence au moyen d'un servomoteur (17).

4. Moissonneuse-batteuse (1) selon la revendication 3, **caractérisée en ce que** le servomoteur (17) est en liaison active avec le système d'assistance au conducteur (8), de sorte que le servomoteur (17) peut être activé au moyen du système d'assistance au conducteur (8).

5. Moissonneuse-batteuse (1) selon les revendications 2 et 3 ou 2 et 4, **caractérisée en ce qu'**une relation entre le paramètre de fonctionnement « hauteur de travail (16) du rouleau d'amenée (5) » et le paramètre de récolte « type de céréale à récolter » et/ou le paramètre de récolte « débit de récolte par unité de temps » et/ou le paramètre de récolte « longueur de tige des plantes coupées (3) » et/ou le paramètre de récolte « couple d'entraînement du rouleau d'amenée (5) » est stockée sur la mémoire de données (10).

6. Moissonneuse-batteuse (1) selon l'une des revendications 1 à 5, **caractérisée en ce qu'**un paramètre de fonctionnement du rouleau d'amenée (5) est constitué de la vitesse de rotation de celui-ci, la vitesse de rotation du rouleau d'amenée (5) pouvant être modifiée.

7. Moissonneuse-batteuse (1) selon les revendications 2 et 6, **caractérisée en ce qu'**une relation entre le paramètre de fonctionnement « vitesse de rotation du rouleau d'amenée (5) » et le paramètre de récolte « type de céréale à récolter » et/ou le paramètre de récolte « débit de récolte par unité de temps » et/ou le paramètre de récolte « humidité de la récolte » et/ou le paramètre de récolte « couple d'entraînement du rouleau d'amenée (5) » est stockée sur la mémoire de données (10).

8. Moissonneuse-batteuse (1) selon l'une des revendications 1 à 7, **caractérisée en ce qu'**un paramètre de fonctionnement du rouleau d'amenée (5) est constitué d'une position des doigts d'amenée (13), la position des doigts d'amenée (13) par rapport au noyau de rouleau (12) pouvant être modifiée.

9. Moissonneuse-batteuse (1) selon la revendication 8, **caractérisée en ce qu'**une pluralité de doigts d'amenée (13) sont montés ensemble, dans un espace interne (18) du noyau de rouleau (12), sur un dispositif de support (19) qui est disposé de manière excentrée par rapport à l'axe de rotation (4) du rouleau d'amenée (5), le dispositif de support (19) étant de préférence monté tournant autour d'un axe de rotation (20) qui est parallèle à l'axe de rotation (4) du rouleau d'amenée (5).

10. Moissonneuse-batteuse (1) selon la revendication 9, **caractérisée en ce qu'**elle présente au moins un servomoteur (21) qui permet de modifier une position du dispositif de support (19) par rapport à l'axe de rotation (4) du rouleau d'amenée (5), et permet de préférence de modifier une excentricité du dispositif de support (19) par rapport à l'axe de rotation (4) du rouleau d'amenée (5), le servomoteur (21) étant de préférence en liaison active avec le système d'assistance au conducteur (8), de sorte que le servomoteur (21) peut être activé à l'aide fu système d'assistance au conducteur (8).

11. Moissonneuse-batteuse (1) selon les revendications 2 et 8 ou 2 et 9 ou 2 et 10, **caractérisée en ce qu'**une relation entre le paramètre de fonctionnement « position des doigts d'amenée (13) » et le paramètre de récolte « type de céréale à récolter » et/ou le paramètre de récolte « humidité de la récolte » et/ou le paramètre de récolte « débit de la récolte » et/ou le paramètre de récolte « longueur de tige des plantes coupées (3) » et/ou le paramètre de récolte « couple d'entraînement du rouleau d'amenée (5) » est stockée sur la mémoire de données (10).

12. Moissonneuse-batteuse (1) selon l'une des revendications 1 à 11, **caractérisée en ce que** le système d'assistance au conducteur (8) comprend au moins un dispositif à capteur (22) qui permet de détecter au moins un paramètre de récolte, le dispositif à capteur (22) permettant de transmettre les données recueillies à l'unité de traitement de données (9) et/ou à la mémoire de données (10).

13. Moissonneuse-batteuse (1) selon la revendication 12, **caractérisée en ce qu'**au moins un dispositif à capteur (22) est conçu pour détecter un type de la céréale à récolter et/ou l'humidité de la récolte et/ou un débit de récolte par unité de temps.
